# EUROPÄISCHE PATENTSCHRIFT

(11) **EP 2 386 833 B1**
(45) Veröffentlichungstag und Bekanntmachung des Hinweises auf die Patenterteilung: **07.02.2018**
(21) Anmeldenummer: 10004928.7
(22) Anmeldetag: 10.05.2010
(51) Int. Cl.: G01D 7/08, G01D 13/08, G01D 1/16, G01R 13/38

(54) **Anzeige für einen Summenwert und Verfahren zur Anzeige eines Summenwerts**
Display for a total value and method for displaying a total value
Affiche pour une somme et procédé d'affichage d'une somme

(43) Veröffentlichungstag der Anmeldung: 16.11.2011
(73) Patentinhaber: Siemens Aktiengesellschaft, 80333 München (DE)
(72) Erfinder: Kaiser, Fritjof, 85579 Neubiberg (DE); Lewis, David, 84453 Mühldorf am Inn (DE); Murr, Florian, 80798 München (DE); Richter, Anke, 81373 München (DE)

(56) Entgegenhaltungen:
- DE-A1-102008 061 723
- DE-C1- 19 533 829
- JP-A- 7 315 078
- US-A1- 2002 171 541
- US-A1- 2010 030 413

## Beschreibung

Zur Anzeige von Werten sind unterschiedliche Anzeigen bekannt. Ein Tachometer weist eine Skala mit einem unteren und oberen Grenzwert auf. Eine Tachometernadel zeigt den auszugebenden Wert auf der Skala des Tachometers an. US 2002/0171541 A1 und DE 195 33 829 C1 offenbaren Anzeigeinstrumente zur Anzeige der Leistungsbilanz in Fahrzeugen mit Elektro- oder Hybridantrieb. Werte, welche sich nicht innerhalb vorgegebener Grenzen bewegen, werden üblicherweise als Zahlen ausgegeben, wobei aus Lesbarkeits- und Platzgründen gegebenenfalls größere Einheiten (beispielsweise Megahertz oder Gigahertz statt Hertz) oder andere Darstellungsformen wie etwa 10², 10³ verwendet werden.

Der Erfindung liegt die Aufgabe zugrunde, eine intuitiv ablesbare Anzeigeeinrichtung für einen Summenwert bereitzustellen, welche einen geringen Platzbedarf hat. Diese Aufgabe wird erfindungsgemäß durch eine Anzeige gemäß Anspruch 1 gelöst, welche einen Addierer aufweist, der zum Addieren mindestens eines negativen Eingangswerts und mindestens eines positiven Eingangswerts und zur Ausgabe eines Summenwerts eingerichtet ist. Ferner weist die Anzeige eine Drehscheibe auf, auf der eine Skala mit negativen Werten, einem Nullwert und positiven Werten aufgetragen ist. Die Anzeige besitzt weiterhin eine Lesemarkierung, welche einen von der Drehscheibe abzulesenden Wert markiert. Mit einem Antrieb ist die Drehscheibe drehantreibbar. Abschließend umfasst die Anzeige eine Steuerung, welche zur Rotation der Drehscheibe mithilfe des Antriebs eingerichtet ist, bis der durch den Addierer ausgegebene Summenwert durch die Lesemarkierung auf der Skala der Drehscheibe markiert wird.

Bei dem Verfahren zur Anzeige eines Summenwerts ist ein Mikroprozessor programmiert, um mindestens einen negativen Eingangswert und mindestens einen positiven Eingangswert zu addieren, wodurch ein Summenwert gebildet wird. Weiterhin ist der Mikroprozessor programmiert, um auf einem Bildschirm einen Ausschnitt einer Drehscheibe anzuzeigen, auf der eine Skala mit negativen Werten, einem Nullwert und positiven Werten aufgetragen ist. Weiterhin ist der Mikroprozessor programmiert, um auf dem Bildschirm eine Lesemarkierung anzuzeigen, welche einen von der Drehscheibe abzulesenden Wert markiert, und um den dargestellten Ausschnitt der Drehscheibe auf dem Bildschirm derart zu wählen, dass der gebildete Summenwert durch die Lesemarkierung auf dem Bildschirm markiert wird.

Neben dem soeben beschriebenen Verfahren umfasst die Erfindung einen computerlesbaren Datenträger, auf dem ein Computerprogramm gespeichert ist, welches das soeben beschriebene Verfahren ausführt, wenn es in einem Computer abgearbeitet wird.

Weiterhin umfasst die Erfindung ein Computerprogramm, das in einem Computer abgearbeitet wird und dabei das zuvor beschriebene Verfahren ausführt.

Ferner umfasst die Erfindung ein Messgerät, welches die zuvor beschriebene Anzeige enthält, sowie ein Messgerät, welches einen Bildschirm und einen Mikroprozessor aufweist, wobei der Mikroprozessor programmiert ist, um das zuvor beschriebene Verfahren auszuführen und den Summenwert auf dem Bildschirm anzuzeigen.

Die Anzeige eines Summenwerts und das Verfahren zur Anzeige eines Summenwerts stellen eine übersichtliche und intuitive Darstellung für den Summenwert bereit. Insbesondere auf mobilen Endgeräten steht nur eine geringe Fläche für den Bildschirm zur Verfügung. Dies erfordert eine komprimierte und übersichtliche Anzeige, welche mit der geringen Fläche auskommt. Die Verwendung einer Drehscheibe - bei der Anzeige als physische Drehscheibe und bei dem Verfahren als virtuelle Drehscheibe - nutzt eine Metapher, welche einem Benutzer aus dem Alltag bekannt und daher intuitiv zugänglich und verständlich ist.

Gemäß einer Weiterbildung der Anzeige und des Verfahrens ist die Skala peripher auf der Oberfläche der Drehscheibe oder parallel und peripher zur Achse der Drehscheibe auf dem äußeren Rand der Drehscheibe aufgetragen.

Diese Weiterbildung der Anzeige hat den Vorteil, dass jeweils eine flache Bauform gewählt werden kann, welche entweder eine geringe Tiefe oder eine geringe Höhe aufweist. So eignet sich der erste Fall besonders für ein Messgerät, welches in der Hand gehalten wird, und der zweite Fall besonders für eine Anzeige, welche in einem Armaturenbrett eingebaut wird.

Beide Varianten können jedoch auch bei der Ausgestaltung der virtuellen Drehscheibe des Verfahrens Anwendung finden.

In einer anderen Weiterbildung der Anzeige und des Verfahrens ist die Skala ab einem Grenzwert in Richtung zunehmender Werte mit einem ersten Farbverlauf, insbesondere einem Farbverlauf von Weiß nach Grün versehen. Weiterhin ist die Skala ab dem Grenzwert in Richtung abnehmender Werte mit einem zweiten Farbverlauf, insbesondere einem Farbverlauf von Weiß nach Rot versehen.

Diese Weiterbildung bietet den Vorteil, dass durch die Farbverläufe für einen Benutzer auf intuitive Weise dargestellt wird, ob sich der Summenwert in einem günstigen oder einem ungünstigen Bereich befindet.

In einer zusätzlichen Weiterbildung des Verfahrens wird der Grenzwert durch einen Benutzer festgelegt. Dies hat den Vorteil, dass ein Benutzer die Darstellung anpassen kann. Eine derartige Anpassung der Skala ist nur für die virtuelle Drehscheibe des Verfahrens möglich.

Gemäß einer Ausführungsform der Anzeige und des Verfahrens gibt der mindestens eine negative Eingangswert eine aktuell verbrauchte elektrische Leistung an. Der mindestens eine positive Eingangswert gibt eine aktuell erzeugte elektrische Leistung an. Hierbei handelt es sich um momentane Werte. Entsprechend repräsentiert der Summenwert eine elektrische Leistungsbilanz.

Diese Ausführungsform hat den Vorteil, dass die elektrische Leistungsbilanz übersichtlich und intuitiv an einen Benutzer ausgegeben wird. Die elektrische Leistungsbilanz wird auf einen Blick vermittelt.

Gemäß einer Weiterbildung des Verfahrens ist die Skala in Richtung der positiven und negativen Werte unendlich. Diese Weiterbildung ist nur bei dem Verfahren möglich, da sie eine virtuelle Drehscheibe voraussetzt. Bei einer physikalischen Drehscheibe wäre die Skala begrenzt, da dort nur 360° zur Verfügung stehen. Die Skala der virtuellen Drehscheibe muss sich jedoch nicht an physikalische Gesetze halten und kann sich in beiden Richtungen ins Unendliche drehen. Diese Weiterbildung bietet den besonderen Vorteil, dass auf dem begrenzten Platz des Bildschirms, gerade bei kleinen Bildschirmen mobiler Endgeräte, eine nach oben und unten variable oder sogar unendliche Werteskala angezeigt werden kann.

Es wird somit ein Visualisierungsprinzip aufgegriffen, welches dem Benutzer aus dem Alltag bereits bekannt ist, beispielsweise von einer gewöhnlichen Waage mit einer Drehscheibe. Durch den unendlichen Wertebereich löst sich die Visualisierung jedoch von den ursprünglichen physikalischen Einschränkungen und stellt eine größere Flexibilität bereit.

Im Folgenden werden Ausführungsbeispiele der Erfindung anhand von Figuren näher erläutert. Es zeigen:
- Figur 1: eine Anzeige mit einer Drehscheibe mit peripher auf der Oberseite aufgetragener Skala mit Farbverläufen, welche auch virtuell auf einem Bildschirm erzeugt werden kann,
- Figur 2: eine schematische Aufsicht einer Anzeige in physikalischer Ausführung mit einer Drehscheibe mit peripher auf der Oberseite aufgetragener Skala,
- Figur 3: eine schematische Darstellung einer Anzeige in physikalischer Ausführung mit einer Skala, welche parallel und peripher zur Drehachse der Drehscheibe auf dem äußeren Rand der Drehscheibe aufgetragen ist,
- Figur 4: eine Anzeige mit einer Skala, welche ebenfalls parallel und peripher zur Drehachse der Drehscheibe auf deren äußerem Rand aufgetragen ist, welche auch virtuell auf einem Bildschirm erzeugt werden kann,
- Figur 5: eine Anzeige wie in Figur 4, welche zusätzlich mit Farbverläufen versehen ist.

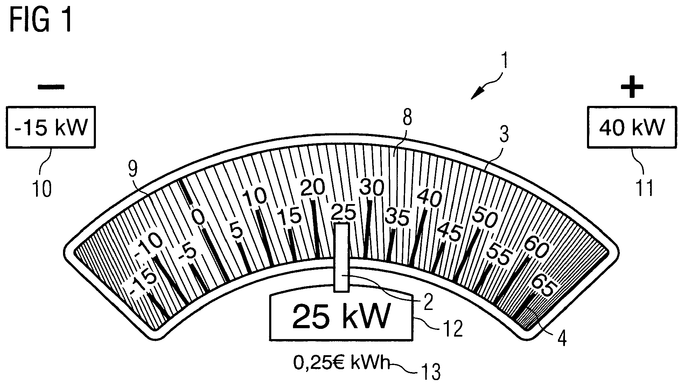

Figur 1 zeigt eine Anzeige gemäß einem Ausführungsbeispiel der Erfindung. Gezeigt ist eine Umgebung 1, in welcher durch einen Ausschnitt eine Drehscheibe 3 sichtbar ist. Bei der Umgebung 1 handelt es sich bei physikalischer Ausgestaltung der Anzeige um ein Gehäuse. Bei einer durch Software simulierten, virtuellen Drehscheibe ist die Umgebung 1 ein Bildschirm oder ein Gehäuse eines entsprechend programmierten mobilen Endgeräts. Während der Ausschnitt in der Umgebung 1 statisch als virtuelles oder physikalisches Fenster verankert ist, dreht sich die Drehscheibe 3 darunter um ihre Drehachse. Hierdurch können unterschiedliche Werte angezeigt werden, welche jeweils durch eine statische Lesemarkierung 2 markiert werden. Die Drehscheibe 3 ist mit einer peripher auf der Oberseite aufgetragenen Skala 4 beschriftet, welche negative Werte, einen Nullwert und positive Werte umfasst. Ein negativer Eingangswert 10 ist ebenfalls in Figur 1 gezeigt und anschaulich mit einem roten Minuszeichen überschrieben. Weiterhin ist ein positiver Eingangswert 11 gezeigt, welcher mit einem grünen Pluszeichen versehen ist.

In dem gezeigten Ausführungsbeispiel wird ein Summenwert 12 sowohl numerisch ausgegeben als auch auf der Skala 4 durch die Lesemarkierung 2 markiert. Der Summenwert 12 ist hierbei die Summe des negativen Eingangswertes 10 und des positiven Eingangswertes 11. Im gezeigten Ausführungsbeispiel ist der Summenwert 12 eine elektrische Leistungsbilanz, wobei der negative Eingangswert eine momentan verbrauchte elektrische Leistung und der positive Eingangswert eine momentan erzeugte elektrische Leistung angibt. Die Anzeige stellt einen "Scheiben-Tachometer" dar, welcher einem Benutzer die elektrische Leistungsbilanz auf einen Blick vermittelt.

Der negative Eingangswert 10 und/oder der positive Eingangswert 11 können hierbei wiederum selbst durch Rechenoperationen gebildet werden, beispielsweise durch Addition oder Multiplikation einer Anzahl weiterer Werte, etwa Werte von verbrauchter oder erzeugter elektrischer Leistung durch eine Anzahl von Komponenten. Alternativ können die zusätzlichen Werte auch unmittelbar mit dem negativen Eingangswert 10 und dem positiven Eingangswert 11 addiert werden. Dies gilt auch für alle anderen beschriebenen Ausführungsbeispiele und Weiterbildungen, sowohl in Hardware als auch in Software.

In Figur 1 ist der positive Wertebereich der Skala 4 mit einem ersten Farbverlauf 8 unterlegt. Der erste Farbverlauf 8 ist hierbei ein Farbverlauf von Weiß nach Grün. Je positiver die elektrische Leistungsbilanz, desto intensiver die grüne Farbe der Skala 4. Die Farbsättigung des ersten Farbverlaufs 8 kann hierbei auch ab einem bestimmten Wert auf der Skala 4 konstant ein Maximum annehmen. Umgekehrt ist der negative Wertebereich der Skala 4 mit einem zweiten Farbverlauf 9 von Weiß nach Rot versehen. Die beiden Farbverläufe können auch - je nach Kulturraum und Domäne - mit anderen Farben als Grün und Rot realisiert werden. Abweichend von Figur 1 kann der Grenzwert, ab dem die beiden Farbverläufe beginnen, durch einen Benutzer auf einen anderen Wert als Null gelegt werden. Ein Benutzer, welcher grundsätzlich mehr elektrische Leistung erzeugt als verbraucht, würde den Grenzwert in den positiven Wertebereich der Skala 4 legen.

Wie in Figur 1 gezeigt, ist nur ein kleiner Sektor der Drehscheibe 3 sichtbar, der sich jeweils nach der anzuzeigenden elektrischen Leistungsbilanz anpasst. Eine Preisinformation 13 ist in Figur 1 ebenfalls in der Darstellung enthalten.

Wenn die Darstellung gemäß Figur 1 durch einen entsprechend programmierten Mikroprozessor erzeugt und auf einem Bildschirm ausgegeben wird, kann die Skala 4 in beiden Richtungen Werte bis ins Unendliche anzeigen. Hierdurch wird ein Scheiben-Tachometer bereitgestellt, dessen Skala nicht begrenzt ist. Somit kann auch ein extremer negativer Eingangswert 10 oder ein extremer positiver Eingangswert 11 verarbeitet und der zugehörige Summenwert 12 dargestellt werden. Ein Maximal- und ein Minimalwert für die Skala 4 muss nicht festgelegt werden.

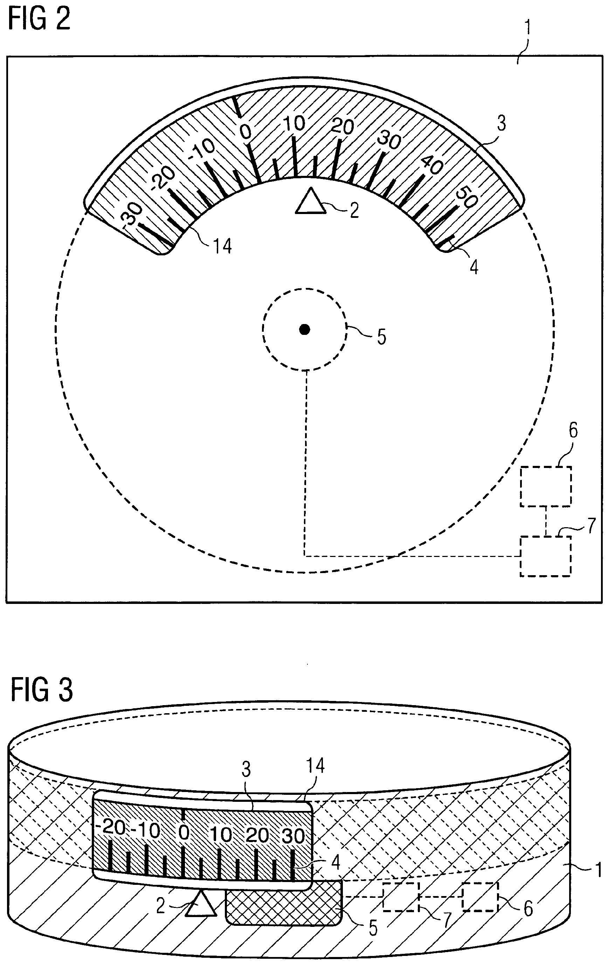

Figur 2 zeigt die Anzeige aus Figur 1 mit zusätzlichen Komponenten, wie sie für eine Realisierung der Anzeige als Hardware erforderlich sind. Gleiche Bezugszeichen bezeichnen die gleichen Elemente wie in Figur 1. Zusätzlich zu Figur 1 ist ein Fenster 14 gezeigt, durch welches für einen Benutzer ein Sektor der Drehscheibe 3 sichtbar ist. Weiterhin enthält die Anzeige aus Figur 2 einen Antrieb 5, beispielsweise einen Elektromotor, mit welchem die Drehscheibe 3 drehantreibbar ist. Der Antrieb 5 wird durch eine Steuerung 7 angesteuert. Ein Addierer 6, beispielsweise ein Mikroprozessor oder eine elektrische Schaltung, addiert einen negativen Eingangswert und einen positiven Eingangswert und gibt einen Summenwert an die Steuerung 7 weiter. Die Steuerung 7 rotiert die Drehscheibe mithilfe des Antriebs 5, bis der durch den Addierer 6 ausgegebene Summenwert 12 durch die Lesemarkierung 2 auf der Skala 4 der Drehscheibe 3 markiert wird. Wenn zweckmäßig, kann die Steuerung 7 hierfür auch als Regelung ausgestaltet sein, wobei der Summenwert 12 als Sollwert für die Ausrichtung der Drehscheibe 3 verwendet wird.

Bei Figur 2 ist die Umgebung 1 ein Gehäuse, beispielsweise das Gehäuse eines Messgerätes, welches in der Hand gehalten werden kann. Da die Skala 4 der Drehscheibe 3 in Figur 2 eine periphere Beschriftung auf der Oberseite der Drehscheibe 3 ist, ergibt sich eine geringe Tiefe für das entsprechende Messgerät.

Figur 3 zeigt eine alternative, physikalische Ausgestaltung der Anzeige. Gleiche Bezugszeichen bezeichnen auch hier die gleichen Elemente wie in den vorangegangenen Figuren. Die Umgebung 1 ist auch hier ein Gehäuse, in diesem Fall in zylindrischer Bauform. Durch das Fenster 14 ist auch hier die Drehscheibe 3 sichtbar, wobei die Skala in diesem Fall parallel und peripher zur Drehachse der Drehscheibe 3 auf dem äußeren Rand der Drehscheibe 3 aufgetragen ist. Unterhalb der Drehscheibe 3 befindet sich der Antrieb 5, über welchen die Drehscheibe 3 drehantreibbar ist. Der Antrieb 5 ist auch hier angesteuert durch die Steuerung 7, welche den Summenwert 12 vom Addierer 6 erhält. Das in Figur 3 gezeigte Anzeigeelement weist eine geringe Höhe auf und kann daher platzsparend in einem Bedienfeld, beispielsweise eines Cockpits, eingebaut werden.

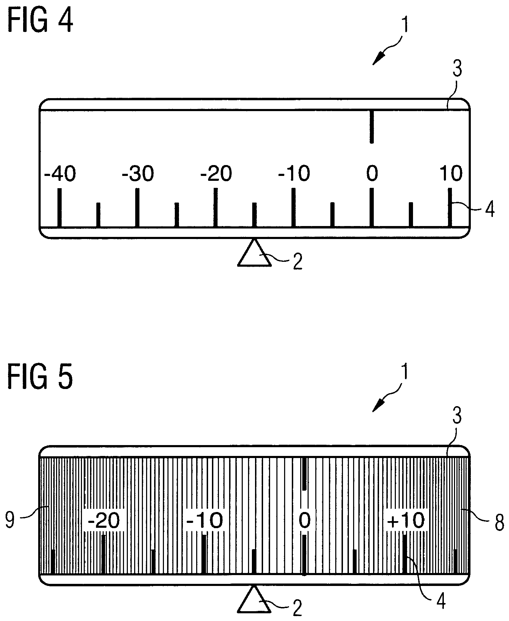

Figur 4 zeigt das Fenster 14 aus Figur 3 in einer vergrößerten Darstellung. Gleiche Bezugszeichen bezeichnen auch hier die gleichen Elemente wie in den vorangegangenen Figuren. Diese Art der Darstellung kann nun auch wieder durch Software als Ausschnitt einer virtuellen Drehscheibe, gegebenenfalls mit unendlichem Wertebereich der Skala 4, realisiert sein.

Figur 5 zeigt die Ansicht aus Figur 4, zusätzlich versehen mit dem ersten Farbverlauf 8 und dem zweiten Farbverlauf 9, der bereits für Figur 1 erläutert wurde.

Wenn die Anzeige durch Software realisiert wird, wobei auf einem Bildschirm ein Ausschnitt einer virtuellen Drehscheibe mit unendlichem Wertebereich der Skala 4 gezeigt wird, kann der Bildschirm in einem portablen Messgerät eingebaut sein. Als Messgerät eignet sich hierbei beispielsweise ein speziell für diese Aufgabe konstruiertes Messgerät, aber auch ein herkömmliches PDA oder Mobiltelefon, wobei dessen Mikroprozessor programmiert ist, um das Verfahren auszuführen.

## Patentansprüche

1. Anzeige für einen Summenwert (12),
- mit einem Addierer (6), eingerichtet zum Addieren mindestens eines negativen Eingangswerts (10) und mindestens eines positiven Eingangswerts (11) und zur Ausgabe eines Summenwerts (12),
**gekennzeichnet durch**
- eine Drehscheibe (3), auf der eine Skala (4) mit negativen Werten, einem Nullwert und positiven Werten aufgetragen ist,
- eine Lesemarkierung (2), welche einen von der Drehscheibe (3) abzulesenden Wert markiert,
- einen Ausschnitt, durch welchen lediglich ein Teil der Drehscheibe (3) sichtbar ist,
- einen Antrieb (5), über welchen die Drehscheibe (3) drehantreibbar ist, und
- eine Steuerung (7), eingerichtet zur Rotation der Drehscheibe (3) mithilfe des Antriebs (5), bis der durch den Addierer (6) gebildete Summenwert (12) durch die Lesemarkierung (2) auf der Skala (4) der Drehscheibe (3) markiert wird.

2. Anzeige nach Anspruch 1,
- bei der die Skala (4) peripher auf der Oberseite der Drehscheibe (3) aufgetragen ist, oder
- bei der die Skala parallel und peripher zur Drehachse der Drehscheibe (3) auf dem äußeren Rand der Drehscheibe (3) aufgetragen ist.

3. Anzeige nach einem der vorangegangen Ansprüche,
- bei der die Skala (4) ab einem Grenzwert in Richtung zunehmender Werte mit einem ersten Farbverlauf (8), insbesondere einem Farbverlauf von Weiß nach Grün, versehen ist, und
- bei der die Skala (4) ab dem Grenzwert in Richtung abnehmender Werte mit einem zweiten Farbverlauf (9), insbesondere einem Farbverlauf von Weiß nach Rot, versehen ist.

4. Anzeige nach einem der vorangegangen Ansprüche,
- bei der der mindestens eine negative Eingangswert (10) eine verbrauchte elektrische Leistung angibt,
- bei der der mindestens eine positive Eingangswert (11) eine erzeugte elektrische Leistung angibt, und
- bei der der Summenwert (12) eine elektrische Leistungsbilanz angibt.

5. Messgerät, welches eine Anzeige nach einem der Ansprüche 1 bis 4 enthält.

6. Verfahren zur Anzeige eines Summenwerts (12), bei dem ein Mikroprozessor programmiert ist, um
- mindestens einen negativen Eingangswert (10) und mindestens einen positiven Eingangswert (11) zu addieren, wodurch ein Summenwert (12) gebildet wird,
**dadurch gekennzeichnet, dass** der Mikroprozessor programmiert ist, um
- auf einem Bildschirm einen Ausschnitt einer Drehscheibe (3), auf der eine Skala (4) mit negativen Werten, einem Nullwert und positiven Werten aufgetragen ist, anzuzeigen,
- auf dem Bildschirm eine Lesemarkierung (2) anzuzeigen, welche einen von der Drehscheibe (3) abzulesenden Wert markiert, und
- den dargestellten Ausschnitt der Drehscheibe (3) auf dem Bildschirm derart zu wählen, dass der gebildete Summenwert (12) durch die Lesemarkierung (2) auf der Skala (4) der Drehscheibe (3) markiert wird.

7. Verfahren nach Anspruch 6,
- bei dem die Skala (4) in Richtung der positiven und negativen Werte unendlich ist.

8. Verfahren nach Anspruch 6 oder 7,
- bei dem die Skala (4) peripher auf der Oberseite der Drehscheibe (3) aufgetragen ist, oder
- bei dem die Skala (4) parallel und peripher zur Drehachse der Drehscheibe (3) auf dem äußeren Rand der Drehscheibe (3) aufgetragen ist.

9. Verfahren nach einem der Ansprüche 6 bis 8,
- bei dem die Skala (4) ab einem Grenzwert in Richtung zunehmender Werte mit einem ersten Farbverlauf (8), insbesondere einem Farbverlauf von Weiß nach Grün, versehen ist, und
- bei dem die Skala (4) ab dem Grenzwert in Richtung abnehmender Werte mit einem zweiten Farbverlauf (9), insbesondere einem Farbverlauf von Weiß nach Rot, versehen ist.

10. Verfahren nach Anspruch 9,
- bei dem der Grenzwert durch einen Benutzer festgelegt wird.

11. Verfahren nach einem der Ansprüche 6 bis 10,
- bei dem der mindestens eine negative Eingangswert (10) eine verbrauchte elektrische Leistung angibt,
- bei dem der mindestens eine positive Eingangswert (11) eine erzeugte elektrische Leistung angibt, und
- bei dem der Summenwert (12) eine elektrische Leistungsbilanz angibt.

12. Computerlesbarer Datenträger,
- auf dem ein Computerprogramm gespeichert ist, welches das Verfahren nach einem der Ansprüche 6 bis 11 ausführt, wenn es in einem Computer abgearbeitet wird.

13. Computerprogramm,
- welches in einem Computer abgearbeitet wird und dabei das Verfahren nach einem der Ansprüche 6 bis 11 ausführt.

14. Messgerät, welches einen Bildschirm und einen Mikroprozessor aufweist, wobei der Mikroprozessor programmiert ist, um das Verfahren zur Anzeige eines Summenwerts (12) nach einem der Ansprüche 6 bis 11 auszuführen und den Summenwert (12) auf dem Bildschirm anzuzeigen.

## Claims

1. Display for a total value (12),
- having an adder (6) set up to add at least one negative input value (10) and at least one positive input value (11) and to output a total value (12),
**characterized by**
- a rotary disc (3), to which a scale (4) having negative values, a zero value and positive values is applied,
- a read marker (2) which marks a value to be read from the rotary disc (3),
- a cutout through which only one part of the rotary disc (3) is visible,
- a drive (5) which can be used to drive the rotary disc (3) to rotate, and
- a controller (7) set up to rotate the rotary disc (3) with the aid of the drive (5) until the total value (12) formed by the adder (6) is marked by the read marker (2) on the scale (4) of the rotary disc (3).

2. Display according to Claim 1,
- in which the scale (4) is peripherally applied to the top side of the rotary disc (3), or
- in which the scale is applied in a manner parallel and peripheral to the axis of rotation of the rotary disc (3) on the outer edge of the rotary disc (3).

3. Display according to one of the preceding claims,
- in which the scale (4) is provided with a first colour gradient (8), in particular a colour gradient from white to green, as of a limit value in the direction of increasing values, and
- in which the scale (4) is provided with a second colour gradient (9), in particular a colour gradient from white to red, as of the limit value in the direction of decreasing values.

4. Display according to one of the preceding claims,
- in which the at least one negative input value (10) indicates a consumed electrical power,
- in which the at least one positive input value (11) indicates a generated electrical power, and
- in which the total value (12) indicates an electrical power balance.

5. Measuring device which contains a display according to one of Claims 1 to 4.

6. Method for displaying a total value (12), in which a microprocessor is programmed
- to add at least one negative input value (10) and at least one positive input value (11), as a result of which a total value (12) is formed,
**characterized in that** the microprocessor is programmed
- to display a section of a rotary disc (3), to which a scale (4) having negative values, a zero value and positive values is applied, on a screen,
- to display a read marker (2), which marks a value to be read from the rotary disc (3), on the screen, and
- to select the displayed section of the rotary disc (3) on the screen in such a manner that the total value (12) formed is marked by the read marker (2) on the scale (4) of the rotary disc (3).

7. Method according to Claim 6,
- in which the scale (4) is infinite in the direction of the positive and negative values.

8. Method according to Claim 6 or 7,
- in which the scale (4) is peripherally applied to the top side of the rotary disc (3), or
- in which the scale (4) is applied in a manner parallel and peripheral to the axis of rotation of the rotary disc (3) on the outer edge of the rotary disc (3).

9. Method according to one of Claims 6 to 8,
- in which the scale (4) is provided with a first colour gradient (8), in particular a colour gradient from white to green, as of a limit value in the direction of increasing values, and
- in which the scale (4) is provided with a second colour gradient (9), in particular a colour gradient from white to red, as of the limit value in the direction of decreasing values.

10. Method according to Claim 9,
- in which the limit value is determined by a user.

11. Method according to one of Claims 6 to 10,
- in which the at least one negative input value (10) indicates a consumed electrical power,
- in which the at least one positive input value (11) indicates a generated electrical power, and
- in which the total value (12) indicates an electrical power balance.

12. Computer-readable data storage medium,
- which stores a computer program which carries out the method according to one of Claims 6 to 11 when it is executed in a computer.

13. Computer program
- which is executed in a computer and in the process carries out the method according to one of Claims 6 to 11.

14. Measuring device which has a screen and a microprocessor, the microprocessor being programmed to carry out the method for displaying a total value (12) according to one of Claims 6 to 11 and to display the total value (12) on the screen.

## Revendications

1. Indication d'une valeur sommatoire (12),
- avec un additionneur (6), installé pour l'addition d'au moins une valeur d'entrée négative (10) et d'au moins une valeur d'entrée positive (11) et pour la production d'une valeur sommatoire (12),
**caractérisée par**
- un disque rotatif (3) sur lequel se trouve une graduation (4) avec des valeurs négatives, une valeur nulle et des valeurs positives,
- un repère de lecture (2), qui marque une valeur à lire du disque rotatif (3),
- une section qui permet de ne voir qu'une partie du disque rotatif (3),
- un entraînement (5) par le biais duquel le disque rotatif (3) est entraîné à rotation, et
- une commande (7) installée pour la rotation du disque rotatif (3) à l'aide de l'entraînement (5) jusqu'à ce que la somme (12) formée par l'additionneur (6) se marque par le repère de lecture (2) sur la graduation (4) du disque rotatif (3).

2. Indication selon la revendication 1,
- dans laquelle la graduation (4) est située en périphérie sur le côté supérieur du disque rotatif (3), ou
- dans laquelle la graduation est située parallèlement et en périphérie de l'axe de rotation du disque rotatif (3) sur l'arête extérieure du disque rotatif (3).

3. Indication selon l'une des revendications précédentes,
- dans laquelle la graduation (4) est munie d'un premier dégradé de couleur (8), en particulier un dégradé de couleur allant du blanc au vert, à partir d'une valeur de seuil dans le sens de valeurs croissantes, et
- dans laquelle la graduation (4) est munie d'un deuxième dégradé de couleur (9), en particulier un dégradé de couleur allant du blanc au rouge, à partir d'une valeur de seuil dans le sens de valeurs décroissantes.

4. Indication selon l'une des revendications précédentes,
- dans laquelle la au moins une valeur d'entrée négative (10) indique une puissance électrique consommée,
- dans laquelle la au moins une valeur d'entrée positive (11) indique une puissance électrique produite, et
- dans laquelle la valeur sommatoire (12) indique un bilan de puissance électrique.

5. Appareil de mesure comprenant une indication selon l'une des revendications 1 à 4.

6. Procédé d'indication d'une valeur sommatoire (12), dans lequel un microprocesseur est programmé pour
- additionner au moins une valeur d'entrée négative (10) et au moins une valeur d'entrée positive (11), formant ainsi une valeur sommatoire (12),
**caractérisé en ce que** le microprocesseur est programmé
- pour indiquer sur un afficheur la section d'un disque rotatif (3) sur lequel une graduation (4) est pourvue de valeurs négatives, d'une valeur nulle et de valeurs positives,
- pour indiquer sur l'afficheur un repère de lecture (2), qui marque une valeur à lire du disque rotatif (3), et
- sélectionner la section représentée du disque rotatif (3) sur l'afficheur de sorte que la valeur sommatoire (12) effectuée se marque par le repère de lecture (2) sur la graduation (4) du disque rotatif (3).

7. Procédé selon la revendication 6,
- dans lequel la graduation (4) est infinie dans le sens des valeurs positives et négatives.

8. Procédé selon la revendication 6 ou 7,
- dans lequel la graduation est située en périphérie du côté supérieur du disque rotatif (3), ou
- dans lequel la graduation (4) est située en parallèle et en périphérie par rapport à l'axe de rotation du disque rotatif (3) sur l'arête extérieure du disque rotatif (3).

9. Procédé selon l'une des revendications 6 à 8,
- dans lequel la graduation (4) est munie d'un premier dégradé de couleur (8), en particulier un dégradé de couleur allant du blanc au vert, à partir d'une valeur de seuil dans le sens de valeurs croissantes, et
- dans lequel la graduation (4) est munie d'un deuxième dégradé de couleur (9), en particulier un dégradé de couleur allant du blanc au rouge, à partir d'une valeur de seuil dans le sens de valeurs décroissantes.

10. Procédé selon la revendication 9,
- dans lequel la valeur de seuil est fixée par un utilisateur.

11. Procédé selon l'une des revendications 6 à 10,
- dans lequel la au moins une valeur d'entrée négative (10) indique une puissance électrique consommée,
- dans lequel la au moins une valeur d'entrée positive (11) indique une puissance électrique produite, et
- dans lequel la valeur sommatoire (12) indique un bilan de puissance électrique.

12. Support de données pouvant être lu par un ordinateur,
- sur lequel est mémorisé un programme informatique, que le procédé selon l'une des revendications 6 à 11 exécute quand il est pris en charge dans un ordinateur.

13. Programme informatique
- pris en charge dans un ordinateur et qui exécute ainsi le procédé selon l'une des revendications 6 à 11.

14. Appareil de mesure présentant un afficheur et un microprocesseur, dans lequel le microprocesseur est programmé pour exécuter le procédé d'indication d'une valeur sommatoire (12) selon l'une des revendications 6 à 11 et à indiquer la valeur sommatoire (12) sur l'afficheur.
